# EUROPEAN PATENT SPECIFICATION

(11) **EP 4 272 608 B1**
(45) Date of publication and mention of the grant of the patent: **11.09.2024**
(21) Application number: 23170026.1
(22) Date of filing: 26.04.2023
(51) Int. Cl.: A47J 31/36, B65D 85/804

(54) **SYSTEM FOR PRODUCING A BEVERAGE**
SYSTEM ZUR HERSTELLUNG EINES GETRÄNKS
SYSTÈME DE PRODUCTION D'UNE BOISSON

(30) Priority: 05.05.2022 IT 202200009248
(43) Date of publication of application: 08.11.2023
(73) Proprietor: FLO - Societa' Per Azioni, 43012 Fontanellato (PR) (IT)
(72) Inventor: ZERBINI, Tazio, 42049 Sant'Ilario d'Enza (RE) (IT)
(74) Representative: Corradini, Corrado

(56) References cited:
- EP-A1- 3 718 925
- WO-A1-2013/171649
- WO-A1-2021/064051
- US-A1- 2021 085 122

## Description

### TECHNICAL FIELD

The present invention relates to the field of beverage preparation.

In particular, the present invention relates to a system for producing a beverage, typically coffee, tea, or other beverages obtainable by brewing/extraction or solution of a granular or powdery food substance.

### PRIOR ART

In the field of beverage preparation, systems are known which provide using a single use capsule containing therein a dose of a food substance and a machine that injects a process liquid and/or vapour, typically water and/or water vapour, into the capsule so as to solubilise the food substance or otherwise pick up the aroma thereof producing the beverage which is then delivered by the machine to a target container.

Such capsules generally comprise a cup-shaped container, defined by a side wall, a bottom wall and an opposite opening.

A dose of the food substance is then housed in said cup-shaped body, and a cover element is arranged to close the opening of the cup-shaped body, so that the dose of food substance is held inside the capsule.

When the beverage is delivered, the cover element is fractured or otherwise pierced, to allow injecting the process liquid and/or vapour, which defines with the dose of the food substance contained inside the capsule the desired beverage.

Similarly, during delivery, the bottom wall of the capsule must be pierced/fractured to allow the beverage resulting from the process liquid and/or vapour and the food substance in the capsule to flow out.

In order to enable the delivery, such machine is generally provided with an extraction unit that makes available a housing seat into which the capsule is introduced.

The extraction unit further comprises an injection element, typically an injection needle, which during delivery fractures the cover element so as to enter the containment compartment defined by the capsule to inject said process liquid and/or vapour, which comes into contact with the dose of food substance collecting the aroma thereof.

At the same time, the extraction unit comprises a cutting element, such as a blade, by means of which the bottom wall is incised or pierced, thus making available an outlet for the resulting beverage. The document WO 2021/064051 discloses a system for producing a beverage comprising a capsule.

One problem encountered in the prior art is that the bottom wall is often deformed and/or bent without it being pierced under the action of the cutting element attempting to pierce it, making it impossible for the resulting beverage to flow out.

An object of the present invention is to solve said drawback of the prior art.

It is a further object of the present invention to achieve such an object within the scope of a simple, rational and affordable solution.

These objects are achieved by the features of the invention set forth in each independent claim. The dependent claims outline preferred and/or particularly advantageous aspects of the invention.

### DISCLOSURE OF THE INVENTION

For the objects set forth above, the invention, in particular, makes available a system for producing a beverage comprising:
- a capsule provided with a container body defining a containment compartment adapted to contain therein a dose of a food substance for producing the beverage, said container body comprising:
- a side wall delimiting an access opening to a compartment containing a food substance, and
   a bottom, adapted to close the container body at one end thereof opposite the access opening, said bottom comprising a bottom wall and a groove (which originates, preferably without interruption, from the bottom wall), said groove being provided with:
   ∘ a base wall delimited by two opposite edges, and
   ∘ two opposite side walls connecting the base wall and the bottom wall, each of which originates from a respective edge of the base wall and is transverse to the base wall itself, and
- a machine for delivering said beverage, said machine being configured to inject a process liquid (and/or vapour) into the capsule to produce the beverage, said machine being provided with an extraction unit comprising:
   - a housing seat for the capsule, and
   - a cutting element, and
wherein the cutting element is configured to pierce the bottom of the capsule at the groove so as to define a through-hole cutting through one of the edges of the base wall.

Thanks to this solution, the drink delivery occurs in a reliable and repeatable manner.

In particular, said edge of the base wall of the groove makes available a portion of the capsule that is particularly rigid, i.e. less prone to deformation when affected by the pressure of the cutting element, i.e. by the force provided by the cutting element.

In other words, said groove defines (outside the compartment containing the food substance) a concave portion of the base wall of the capsule, with the concavity directed outward of the containment compartment (i.e. in the direction opposite the upper opening) of the container body, and this geometry makes available at each edge, an area of the base wall that is particularly stiff (i.e. less subject to deformation when subjected to the action of the cutting element).

Thanks to this, the system allows to globally pierce the capsule in a particularly repeatable manner, thus obviating the possibility that the capsule may deform without being pierced. In other words, the system allows to make the beverage delivery operations particularly repeatable, i.e. reproducible at each delivery, making sure that the cutting element pierces the bottom wall of the capsule.

The system, in practice, allows to properly deliver the beverage each time it is used. Thanks to this, furthermore, the system allows to obviate wastes of raw materials, particularly of the process liquid and/or vapour and/or food substance.

According to an aspect of the invention, the machine may comprise a pair of cutting elements each of which is configured to pierce the bottom of the capsule at the groove so as to define a respective through-hole cutting through a respective one of said base wall edges.

Thanks to this solution, the system is even more effective in terms of beverage delivery, and furthermore the delivery itself may occur particularly quickly.

Another aspect of the invention provides that, said through-hole may also cut through (at least partially) the side wall originating from said edge of the base wall cut through by the cutting element.

Thanks to such solution, piercing the bottom of the capsule for delivering the beverage is made in another portion of the bottom groove of the particularly rigid capsule.

In fact, the side wall, which is transverse to the base wall of the groove and also to the bottom wall, is overall arranged in such a way as to be more easily pierced by the cutting element penetrating the side wall at an insertion angle lower than a right angle, i.e. transversely to the base wall but not orthogonally, thus obviating the fact that the side wall may deform without being torn.

Yet another aspect of the invention provides that each edge of the base wall can be defined by an edge between the base wall and a respective side wall.

Thanks to this solution, the edge is particularly easily penetrable by the cutting element, making the overall beverage production system more effective.

A further aspect of the invention provides that each edge may be defined by a fillet (i.e. a rounded corner) between the base wall and a respective side wall.

Thanks to this solution, the capsule globally has an easily reproducible geometry, e.g. by moulding plastic material preferably biopolymeric, and, at the same time, the edge is easily pierceable for the beverage to flow out of the capsule.

Yet another aspect of the invention provides that said through-hole may be centred on one of said edges.

Thanks to such solution, piercing the capsule is particularly simple and repeatable, making the system safer, in terms of the actual delivery of the beverage.

According to another aspect of the invention, at least one of the side walls of the groove may define (particularly on the outside of the containment compartment defined by the container body) with the base wall, an angle greater than a right angle.

Thanks to such a geometry of the capsule, said edge of the base wall of the groove is particularly exposed to the cutting element, and the required mutual movement of the capsule and the cutting element for piercing the capsule is simple and repeatable. Thanks to this, the overall architecture of the machine, and in particular the cutting element is particularly rational simple and easy to assemble.

According to an aspect of the invention, the bottom wall and the base wall of the groove may both be flat and parallel to each other.

Thanks to this solution, the capsule has a particularly simple geometry and is easy to manufacture (for example easily achievable by moulding or thermoforming polymeric material, preferably biopolymeric, preferably a material capable of acting as an barrier to the oxygen so as to maintain the chemical-physical properties of the food dose contained in the capsule).

According to another aspect of the invention, the distance between the opening and the bottom wall along a direction perpendicular to a lying plane of the access opening (i.e. with respect to an extension direction of the capsule from the access opening to the bottom wall) may be greater than the distance between the access opening and the base wall along said direction.

According to another aspect of the invention, an axis of intersection between two capsule median planes, that are mutually transverse and perpendicular to a lying plane of the access opening, may not intersect the base wall of the groove.

According to a further aspect of the invention, the groove may have an annular shape. Thereby, the groove is provided with a particularly regular and uniform shape along the extension of the capsule bottom, and, as a result, manufacturing the capsule appears to be particularly simple and cost-effective.

In addition, the base wall of the groove may thus be defined by a circular crown (with a constant cross-section along the circumferential extension), preferably having the centre on an axis of intersection between two capsule median planes that are mutually transverse and orthogonal to a lying plane of the access opening.

The annular-shaped (full circumferential) groove essentially divides the bottom wall into two portions, a first portion of which is delimited perimetrally (i.e. surrounded) by the groove and a second portion surrounding the groove.

The container body may also be defined by a solid of revolution having an axis of revolution coincident with said axis of intersection.

Thanks to this annular extension of the groove, positioning the capsule into the extraction unit is particularly fast and intuitive.

In fact, it is sufficient to arrange the capsule with the bottom facing the cutting element for the cutting element to be consequently always positioned facing the groove, making it particularly quick and easy to introduce the capsule into the housing seat defined by the extraction unit, and making it particularly fast to deliver the beverage.

According to a further aspect of the invention, the cutting element and the capsule may be mutually movable along a rectilinear trajectory (e.g. purely rectilinear, i.e. entirely rectilinear) between a disengaged position, wherein the cutting element is outside the capsule, and an engaged position, wherein it is at least partially inserted inside the capsule. Thanks to this solution, the mutual movement between the capsule and the cutting element consists of elementary movements of pure translation, which are therefore particularly simple and do not require structurally complex means of movement, making the overall machine architecture particularly simple and quicker to assemble.

According to another aspect of the invention, said trajectory may be perpendicular to the base wall.

Thereby, the piercing of the groove may be achieved by means of one simple movement, and such movement may be rectilinear and consequently easy to perform and involving less energy consumption.

According to another aspect of the invention, the cutting element may comprise an insertion end which is configured to define a first contact between the cutting element and the capsule in order to make the through-hole, and wherein said first contact between the cutting element and the capsule occurs on one of said edges of the base wall.

Thanks to this solution, the capsule may be pierced in a particularly easy manner.

In particular, said insertion end may be shaped with a tip that defines the first contact between the cutting element and the capsule.

In other words, said insertion end of the cutting element has a vertex, defined by the tip end, defining the first contact, i.e. it is the first surface/portion of the cutting element that encounters the groove to pierce it.

Thanks to this solution, the cutting element is particularly fit for the purpose of piercing the capsule, and the aforementioned design of the cutting element with an insertion end makes it possible to pierce the bottom wall of the capsule precisely and more effectively. Another aspect of the invention provides that said cutting means may include a spine or a blade or a needle.

Thanks to this solution the cutting element is particularly fit for the purpose of piercing the bottom of the capsule.

The cutting element also has a particularly small footprint, allowing it to be easily enclosed inside the box-shaped body of the machine.

According to a further aspect of the invention, the box-shaped body of the capsule may be made of biopolymeric material.

In particular, said material of which the capsule is made is configured to act as an oxygen barrier in order to maintain the chemical and physical properties of the food dose contained in the capsule unaltered.

Thanks to such solution, the capsule is biodegradable, so the material of which the container body is made is eco-friendly.

### BRIEF DESCRIPTION OF THE DRAWINGS

Further features and advantages of the invention will be more apparent after reading the following description provided by way of non-limiting example, with the aid of the figures illustrated in the accompanying drawings.
Figure 1 is a schematic front view of a machine of a system according to the invention.
Figure 2 is a schematic front view from above in partial transparency of a system for producing a beverage according to the invention comprising the machine of Figure 1 and a capsule.
Figure 3 is a front view of a capsule of the system according to the invention.
Figure 4 is a front view from below of the capsule of Figure 3.
Figure 5 is a section view along the line V-V of Figure 4.
Figure 6 is an enlarged view of a portion of Figure 5.
Figure 7 is a front view from below of the capsule of Figure 3 in which a through-hole has been made.
Figure 8 is an enlarged view of a portion of Figure 7.

### BEST MODE TO IMPLEMENT THE INVENTION

Referring in particular to such figures, 10 globally indicates a system for producing a beverage, which will hereinafter be referred to more simply as "system 10", typically coffee, tea, or other beverages obtainable by brewing/extraction or solution of a granular or powdery food substance.

The system 10 comprises, first of all, a capsule 20, which contains a dose of said food substance, which may preferably be in powdery form.

The capsule is provided with a container body 21, defining a containment compartment 22 adapted to contain therein said dose of the food substance for producing the beverage. The container body 21 of the capsule 20 generally has a "cup" shape.

It comprises, first of all, a side wall 23 with a preferably circular section.

Obviously, the shape of the container body 21 and in particular of the side wall 23 may be any shape, such as truncated conical, or cylindrical, hemispherical, polygonal or any other suitable shape.

The side wall 23 delimits perimetrally an access opening 24 to the containment compartment 22 of the capsule 20, through which opening the dose of the food substance is introduced into the container body 21.

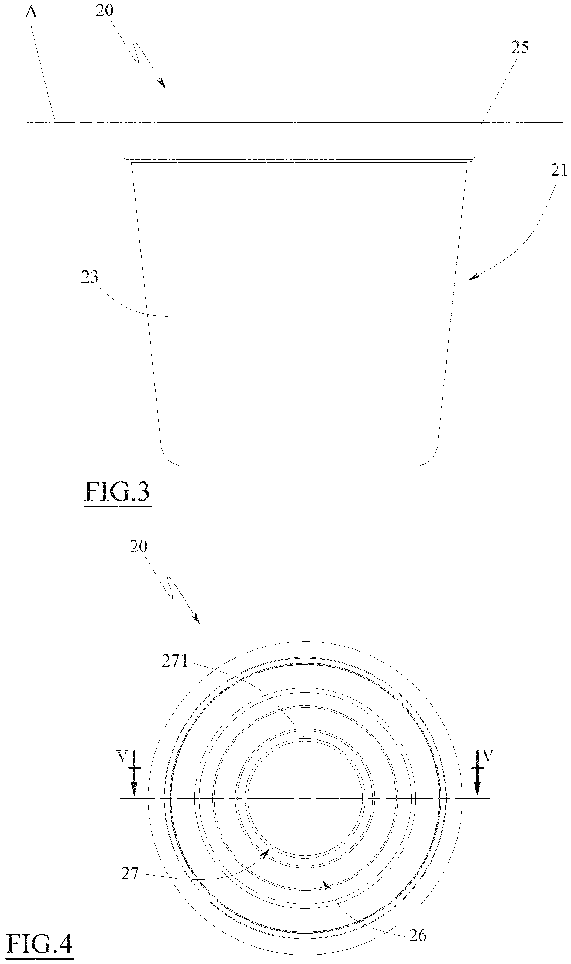

Said access opening 24, as visible in Figure 3, lies on an (imaginary) lying plane A.

As shown in the figures, the side wall 23 may comprise a flange 25, which originates externally (i.e. radially), transversally, e.g. orthogonally (i.e. substantially squaring), without interruptions from the side wall 23 itself.

Said flange 25, in particular, has a planar surface facing in the direction opposite the containment compartment, which lies on said lying surface A of the access opening 24. The access opening 24 is closed by means of a cover element (not shown).

The cover element is applied after the container body 21 has been filled with the food substance through the opening defined by the side wall 23.

Said cover element comprises, for example, a sheet (or film, not shown) applied to the container body 21, i.e. fixed, e.g. by heat-sealing or gluing, to the container body 21, e.g. fixed at said surface (lying on the lying plane A) of the flange 25 of the side wall 23. Said cover element, for example, may have a thickness of between 10 µm and 140 µm, for example it may have a thickness of 30 µm.

Such a cover element may be made of polypropylene (PP), however, it is not excluded that in alternative embodiments of the invention it may be made of aluminium (Al) or of a multilayer material comprising aluminium, or of a biopolymer or other material fit for the purpose.

The cover element is configured to be sealingly associated with the container body so as to seal the food substance inside the containment compartment (i.e. so as to close the upper opening, thereby isolating the food substance dose) from the external environment. The cover element is breakable/fracturable or pierceable, i.e. it is configured so as to be fractured or pierced, with such a fracture or holes that a process liquid and/or vapour, typically water and/or water vapour, can be injected into the container body 21 of the capsule 20.

For example, the cover element may be pre-pierced, with holes configured to retain the food substance within the cup-shaped body of the capsule 10, or the cover element may have a trigger, (e.g. made from said holes) configured to retain the food substance within the container body, and which triggers and/or allows to fracture and/or pierce more easily the cover element while the beverage is being prepared for injecting the process liquid and/or vapour.

The container body 21 of the capsule 20 then comprises a bottom, adapted to close the side wall 23 at one end thereof opposite the access opening 24 (and the film), i.e. closing the container body 21 itself in a position opposite the access opening 24.

The containment compartment 22 of the capsule 20 is thus laterally delimited by the side wall 23, at the top by the cover element sealing (i.e., by the film adapted to seal) the access opening 24 of the capsule 20, and at the bottom by the bottom of the container body 21.

Said capsule bottom is adapted to be pierced, as will better appear hereinafter, to allow the outflow of beverage produced, i.e. obtained by means of the process liquid which has entered the container body 21 and which has solubilised and/or otherwise collected the aroma of the food substance contained within the capsule.

The container body 21, i.e. the side wall 23 and the bottom, may preferably be made of a polymeric material.

Preferably the container body 21, i.e. the side wall 23 and the bottom, may be made of a biopolymeric material, for example a poly-lactic acid or a poly-lactic acid compound.

It is not excluded that the container body 21 may be made of any other material, for example a multilayer material, for example any other biodegradable and/or compostable material.

The container body 21 may also be made in one piece, i.e. the side wall 23 and the bottom may be made in one piece, i.e. they may be made in a monolithic integral body, i.e. they can be made by means of the same process as the material of which the container body 21 is made, e.g. they may be made by means of a single polymeric material (preferably biopolymeric) moulding process.

The bottom of the container body 21 comprises a bottom wall 26, e.g. substantially flat and preferably lying on a plane parallel to said lying plane A of the upper opening 24. According to the invention, the bottom of the capsule 20 further comprises a groove 27 (or recess).

Said groove 27 originates, without interruptions, from the bottom wall 26.

Such groove 27, is basically defined by a recess towards the inside of the container body 21, i.e. towards the containment compartment 22 of the food substance.

In other words, said groove 27 defines a concave portion of the bottom of the capsule 20, having the concavity facing outwards from the containment compartment 22 (i.e. in the direction opposite the access opening 24) of the container body 21.

The groove 27, first of all, is provided with a base wall 271, which is delimited, at its opposite ends, by two opposite edges B1, B2.

The base wall 271 of the groove is placed with respect to a direction perpendicular to said (imaginary) lying plane A of the access opening 24 (i.e., with respect to a direction orthogonal to the bottom wall 26), at a distance from the access opening 24 lower than the distance between the access opening 24 and the bottom wall 26 along said direction. The base wall 271 makes available two opposite surfaces, one of which is inside the containment compartment 22 of the capsule 20 and facing it (and towards the access opening 24), and one outside the containment compartment 22 and directed in the opposite direction.

Preferably, the bottom wall 26 and the base wall 271 of the groove 27 are both planar and parallel to each other.

The groove 27 then comprises two opposite (and mutually facing) side walls 272a, b connecting the base wall 271 of the groove 27 with the bottom wall 26 of the container body 21, i.e. a first connection side wall 272a and a second connection side wall 272b.

Each of the side walls 272a, b originates from a respective edge B1, B2 of the base wall 271 of the groove 27 and is also transverse to said base wall 271.

Each side wall 272a, b thus has along its extension a first end (lower, i.e. distal from the access opening 24) which originates (without interruptions) from the base wall 26 (transversely thereto) and an opposite end (upper, i.e. proximal to the access opening 24) which originates (without interruptions) from a respective edge B1, B2 of the base wall 271. Each side wall 272a, 272b also defines, with the bottom wall 26, a respective joining edge (which may, for example, be defined by a corner, for example rounded, defined by the side wall 272a, 272b with the bottom wall 26).

For example, each edge B1, B2 of the base wall 271 may be defined by the corner defined by the base wall 271 with each side wall 272a, 272b.

Yet, it is possible to provide that each edge B1, B2 may be defined by a fillet (i.e. a rounded corner) between the respective side wall 272a, b and the base wall 271 of the groove 27.

For example, as visible in Fig. 4, the groove 27 may have an annular shape.

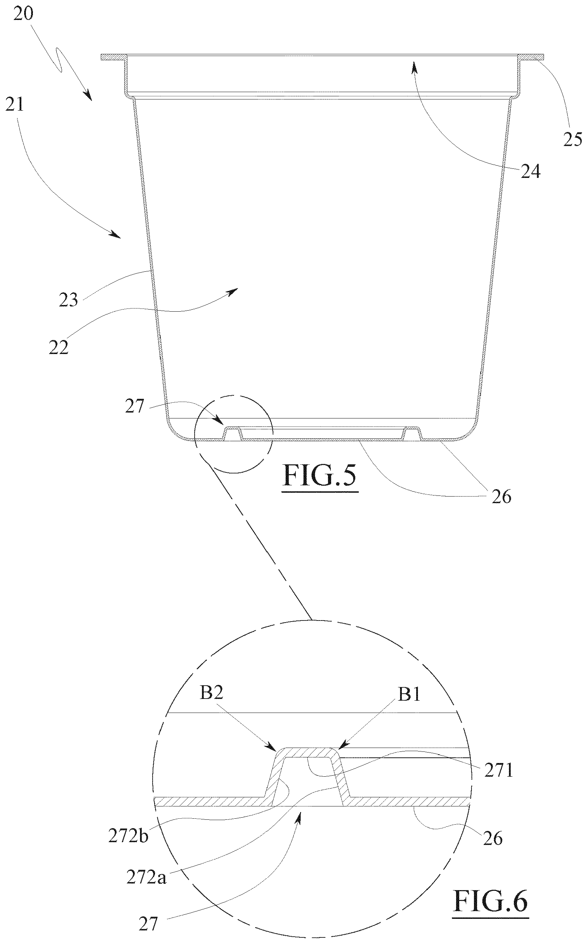

The annular-shaped (full circumferential) groove 27, in particular may substantially divide the bottom wall 26 into two portions of which a first portion which is perimetrically delimited (i.e. surrounded) by the groove 27 and a second portion which surrounds the groove 27 (as, for example, better visible in Figure 5).

The groove 27, in other words, may have the shape of a ring wrapping around an (imaginary) axis of revolution.

Preferably, said (imaginary) axis of revolution is coaxial (i.e. coincident) with the axis of intersection of two median planes of the capsule that are mutually transverse and perpendicular to the (imaginary) lying plane A of the access opening 24.

In such case the base wall 271 and the side walls 272a, b of the groove 27 are also ringshaped.

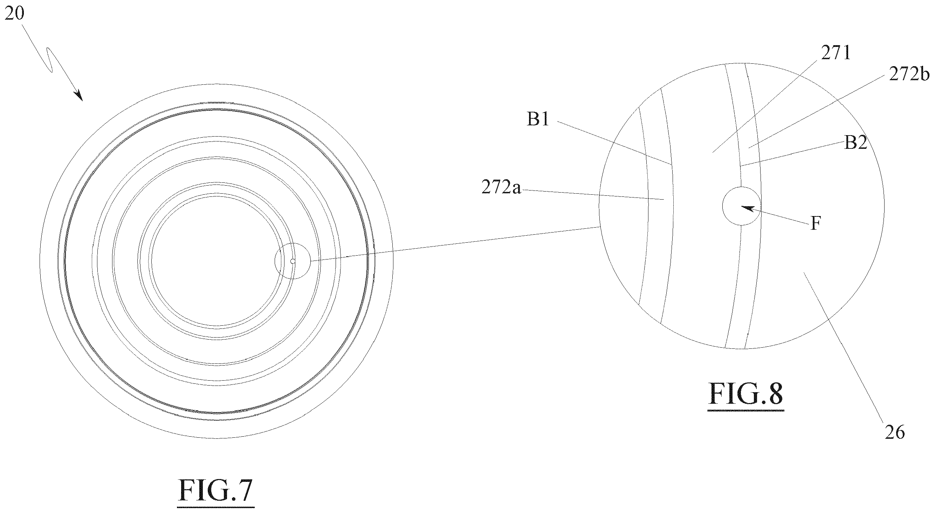

In other words, as better visible in Figure 4 or 7, the base wall 271 of the groove 27 may have a shape in plan view of a circular crown, for example with a constant cross-section along the circumferential extension, i.e. it may have an inner circumference (i.e. of smaller radius) and an outer circumference (i.e. of larger radius) preferably having a common centre.

In other words, the base wall 271 may be delimited by an inner circumference defining one of said edges B1, which is proximal to said axis of intersection between two median planes of the capsule 10 that are mutually transverse and orthogonal to the (imaginary) lying plane A, and by an outer circumference defining the other edge B2, and which is distal from said axis of intersection.

At least one of the side walls 272a, 272b of the groove 27, e.g. each of the side walls 272a, 272b, defines (outside the capsule containment compartment 20) with the base wall 271 an angle greater than a right angle (and lower than a flat angle).

For example, said angle defined between the base wall 271 and (e.g. each) side wall 272a, 272b (outside the containment compartment) of the groove may be between 91° and 115° degrees, preferably between 95° and 110°, preferably an angle of 105°.

The system 10 further comprises a machine 30 configured to inject a process liquid and/or vapour, typically water and/or water vapour, into the capsule 20 to produce the beverage and subsequently deliver the resulting beverage.

Said machine 30 generally comprises a box-shaped body 31, adapted to contain the mechanical/electrical/electronic and hydraulic components of the machine 30.

The machine 30 comprises a beverage extraction unit 33, which is configured to inject the process liquid and/or vapour into the containment compartment of the container body and also to pierce the capsule so as to allow the beverage resulting from the process liquid and/or vapour and the food substance contained in the containment compartment to flow out.

The extraction unit defines a housing seat 331 adapted to house the capsule 20 therein, For example, the extraction unit may comprise a cup that makes available said housing seat for the capsule 20, which cup may be removably associated with the container body so as to allow the capsule 20 to be introduced and subsequently removed following the extraction of the beverage.

Alternatively, said housing seat 331 may be defined by a recess (of suitable geometry and dimensions) made in the box-shaped body 31 of the machine 30 and selectively openable/closable by means of a lid associated with the box-shaped body 31 (e.g. hinged or removably fixed).

The housing seat 331 is preferably provided with a shape and/or size corresponding to the shape and/or size of the capsule 20.

Thereby, the housing seat 331 may be adapted to substantially precisely house said capsule 20 therein.

The extraction unit 33 is fluidically connected to a process liquid tank 34 and configured to pick up a (given) amount of process liquid from it.

For example, said tank 34 may be contained inside the box-shaped body 31 of the machine 30 or may be associated with it externally.

For example, the extraction unit may be provided with heating means (e.g. in the form of an electrical resistor or other) that allow to heat the process liquid to a desired operating temperature, for instance to such an operating temperature that it at least partially or completely vaporises (i.e. brings it to the vapour state).

The machine extraction unit 30 further comprises a piercing and injection device, which is adapted to pierce the cover element (e.g., at least one hole in the cover element) of the capsule 20 and inject the process liquid and/or vapour, picked up from the tank 34 and heated to the desired operating temperature, inside the containment compartment 22 of the container body 21 through the access opening.

The piercing and injection device may comprise, for example, an injection needle (not shown) adapted to pierce the cover element (i.e. the film) of the capsule 20 to enter the containment compartment 22 defined by the capsule 20.

The liquid and/or process vapour injected by the piercing and injection device comes into contact with the dose of food substance housed inside the containment compartment, collecting the aroma and producing the drink.

The extraction unit 33 of the machine 30 also comprises (at least) a cutting element 336, which is designed (i.e., configured) to cut i.e. pierce the capsule 20, i.e., to make at least one through-hole F, to allow the resulting beverage to flow out.

More in detail, the cutting element 336 is designed to pierce the bottom of the capsule 20, i.e. to make at least one through-hole F in the bottom of the capsule 20.

The cutting element 336 of the machine 30 is, in particular, configured to pierce the bottom at groove 27.

More specifically, the cutting element 336 is configured to pierce the groove 27 of the capsule 10 so as to define a through-hole F cutting through one of the edges B1, B2 of the base wall 271 (as better visible in Figure 8).

Preferably, the cutting element 336 is configured to pierce the groove 27 so as to make a through-hole F centred on one of said edges B1, B2 of the base wall 271.

In other words, said through-hole F may have a circular section whose geometric centre lies (i.e. is made) at one of said edges B1, B2 of the side wall.

Yet, in other words, the cutting element 336 may have a longitudinal central axis, and be configured to pierce the capsule 20 so that said longitudinal central axis lies at one of said edges B1, B2 of the base wall 271.

For example, said through-hole F made by the cutting element 336, also, cuts through (at least partially) the side wall 272a, 272b which originates from the edge B1, B2 cut by the through-hole F.

The cutting element 336 may be configured to make a through-hole F in the groove 27 that does not cut through a geometric centre of the base wall 271.

In other words, the cutting element 336 may be configured to make a through-hole F cutting through one of said edges B1, B2, at most a portion of the side wall 272a, 272b departing from said edge B1, B2 and at most an extremal portion of the base wall 271 proximal to said edge B1, B2.

The cutting element 336 may, in particular, be configured to pierce the groove 27 without removing (i.e. completely detaching) material from it.

Thanks to this, the groove 27 may be pierced without allowing the portion thereof at which the through-hole F has been made to remain vacant inside the housing seat 331 and possibly prevent the beverage from flowing out of the housing seat towards a target container.

Preferably, the cutting element 336 may be configured to pierce the capsule 26 at the groove 27 so as to define a flap of the groove 27 that remains constrained to the remaining part of the groove 27 and folded inwards into the containment compartment.

The cutting element 336, for example, by making the through-hole F, can make a flap hinged to the bottom wall 26 by means of a folding line placed on the (respective, i.e. at the respective) joining edge between the side wall 272a, 272b and the bottom wall 26. In detail, the cutting element 336 and the capsule 20 are mutually movable between a disengaged position wherein the cutting element 336 is completely outside of the containment compartment of the capsule 20 (i.e. it does not pierce the capsule 20), and an engaged position wherein the cutting element 336 pierces the capsule 20 (i.e. of said edges B1, B2) and is at least partially inserted within the containment compartment of the container body 21 of the capsule 20.

Preferably, the cutting element 336 comprises an inserting (cutting) end which is configured to define a first contact with the groove 27, during the movement from the disengaged position to the engaged position.

Said first contact between the cutting element 336 and the groove for making the through-hole F may occur, in particular, on one of said edges B1, B2 of the base wall 271.

In particular, said insertion end of the cutting element 336 may be shaped like a tip (i.e. it may be substantially triangular-shaped), or otherwise define a (cutting) section of the cutting element 336 proximal to the groove 27 that substantially defines a vertex of the cutting element 336, and the vertex (i.e. said section of the cutting element 336 proximal to the groove 27) defines the first contact between the cutting element 336 and the groove 27 at one of said edges B1, B2 of the groove.

Preferably, the capsule and the cutting element 336 are mutually movable between the disengaged position and the engaged position (and vice versa) along a rectilinear trajectory, e.g. purely rectilinear (i.e. entirely rectilinear).

In other words, between the disengaged position and the engaged position, at least one between the capsule 20 and the cutting element may perform a pure translatory movement, i.e. a pure translation, for example along a direction orthogonal to the base wall 271 (i.e. along a direction transverse to the side walls 272a, b).

For example, it is possible to provide that the cutting element 336 may be integral with the housing seat 331 of the machine 30, i.e. it may be rigidly fixed (i.e. fixed without residual degrees of freedom) inside the housing seat (i.e. fixed without residual degrees of freedom to the cup defining the housing seat) and facing inwards.

In this case, the extraction unit 33 of the machine 30 may further comprise a pusher element (not shown) adapted to move the capsule along the aforementioned rectilinear trajectory, forcedly pushing it against the cutting element 336, thereby piercing the capsule 20.

For example, said pusher element may be defined by said lid that closes the housing seat formed in the box-shaped body 31 of the machine 30, which when closed (i.e. fixed to the box-shaped body 31 so as to occlude the housing seat 331) presses on the capsule 20 pushing it against the cutting element 336.

Alternatively, it is possible to provide that the extraction unit 33 may comprise means for moving the cutting element 336, adapted to move said cutting element 336 between the disengaged position and the engaged position, for example along the aforesaid rectilinear trajectory.

Alternatively, it is also possible to provide that the extraction unit 33 of the machine 30 comprises both the pusher element for the capsule 20 and the means for moving the cutting element 336.

Said rectilinear trajectory defining the mutual movement between the capsule 20 and the cutting element 336 between the disengaged position and the engaged position is preferably perpendicular to the base wall 271 of the groove 27.

For example, said trajectory is preferably parallel to the aforementioned (aforesaid) axis of intersection between two median planes that are mutually transverse and orthogonal to the lying plane A of the access opening 24 of the capsule 20.

The cutting element 336 may, for example, comprise a spine or needle or a blade, or in general any element capable of cutting or piercing the material of which the container body 21 of the capsule 20 is made.

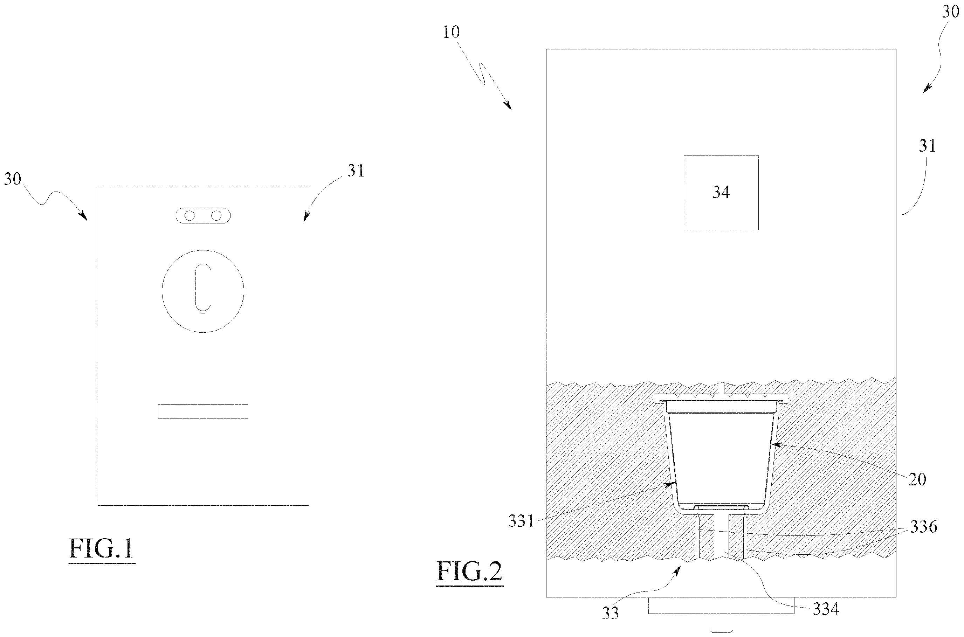

For example, as visible in Figure 2, the extraction unit 33 may comprise more than one cutting element 336, for example a pair of cutting elements 336 (each as described above and each movable between a respective disengaged position and a respective engaged position), each of which is configured to pierce the bottom of the capsule 20 so as to make a respective through-hole F cutting through a respective one of said edges B1, B2 of the base wall 271.

For instance, one cutting element 336 of the pair may be configured to make a through-hole F cutting one edge B1 of the base wall 271, while the other cutting element 336 of the pair may be configured to make a respective through-hole F cutting through the other edge B2 of the base wall 271 of the capsule 20.

The through-hole F made by the cutting element 336 may have a size (diameter or width or cross-section) greater than the size (diameter or width or cross-section) of the cutting element itself.

In particular, due to the mutual translation movement of the cutting element 336 and the capsule 20 along said direction transverse to the side wall 272a, b , and due to the fact that the through-hole F can also cut through said side wall 272a, b which originates from the respective edge B1, B2, it is possible to globally obtain a through-hole F with a size (diameter or width or cross-section) greater than the size (diameter or width or cross-section) of the cutting element itself.

For example, the extraction unit 33 may further comprise a delivery duct 334, through which the beverage flowing out of the capsule 20 (through the through-hole F made by the cutting element 336) flows out of the housing seat 331 and is conveyed outside the machine 30 to a target container.

The invention thus conceived is susceptible to several modifications and variations, all falling within the scope of the invention defined by the claims.

In practice, the materials used, as well as the contingent shapes and sizes, can be whatever according to the requirements without for this reason departing from the scope of protection of the following claims.

## Claims

1. A system (10) for producing a beverage comprising:
- a capsule (20) provided with a container body (21) defining a containment compartment adapted to contain therein a dose of a food substance for producing the beverage, said container body (21) comprising:
• a side wall (23) delimiting an access opening (24) to the containment compartment (22) of the food substance, and
• a bottom, adapted to close the container body (21) at one end thereof opposite the access opening (24), said bottom comprising a bottom wall (26) and a groove (27), said groove (27) being provided with:
∘ a base wall (271) delimited by two opposite edges (B1, B2), and
∘ two opposite side walls (272a, b) connecting the base wall (271) with the bottom wall (26), each of which originates from a respective edge (B1, B2) of the base wall (271) and is transverse to the base wall itself,
- a machine (30) for delivering said beverage, the machine (30) being configured to inject into the capsule (20) a process liquid for producing the beverage, said machine (30) being provided with an extraction unit (33) comprising:
• a housing seat (331) for the capsule (20), and
• a cutting element (336),
**characterized in that** the cutting element (336) is configured to pierce the bottom of the capsule (10) at the groove (27) so as to define a through-hole (F) cutting through one of the edges (B1, B2) of the base wall (271).

2. The system according to claim 1, wherein said through-hole (F) also cuts through the side wall (272a, 272b) originating from said edge (B1, B2) cut through by the cutting element (336).

3. The system (10) according to claim 1, wherein each edge (B1, B2) is defined by a corner between the base wall (271) and a respective side wall (272a, 272b).

4. The system (10) according to claim 1, wherein each edge (B1, B2) is defined by a fillet between the base wall (271) and a respective side wall (272a, 272b).

5. The system (10) according to claim 1, wherein the cutting element (336) is provided with an insertion end configured to define a first contact between the cutting element (336) and the capsule (10) for making the through-hole (F), and wherein said first contact between the cutting element (336) and the capsule (10) occurs on one of said edges (B1, B2) of the base wall (271).

6. The system (10) according to claim 1, wherein said through-hole (F) is centred on one of said edges (B1, B2).

7. The system (10) according to the preceding claim, wherein at least one of the side walls (272a, b) of the groove (27) defines with the base wall (271) an angle greater than a right angle.

8. The system (10) according to any one of the preceding claims, wherein the groove (27) has an annular shape.

9. The system (10) according to any one of the preceding claims, wherein the cutting element (336) and the capsule (20) are mutually movable along a rectilinear trajectory between a disengaged position, wherein the cutting element (336) is outside the capsule (20), and an engaged position, wherein it is at least partially inserted inside the capsule (20).

10. The system (10) according to any one of the preceding claims, wherein the cutting element (336) comprises a spine or a blade or a needle.

## Patentansprüche

1. System (10) zum Zubereiten eines Getränks, umfassend:
- eine Kapsel (20), die mit einem Behälterkörper (21) versehen ist, der eine Aufnahmekammer definiert, die angepasst ist, um darin eine Dosis einer Nahrungsmittelsubstanz zum Zubereiten des Getränks zu enthalten, der Behälterkörper (21) umfassend:
• eine Seitenwand (23), die eine Zugangsöffnung (24) zu der Aufnahmekammer (22) für die Nahrungsmittelsubstanz begrenzt, und
• einen Boden, der angepasst ist, um den Behälterkörper (21) an einem Ende davon gegenüber der Zugangsöffnung (24) zu schließen, wobei der Boden eine Bodenwand (26) und eine Nut (27) umfasst, wobei die Nut (27) mit Folgendem versehen ist:
o einer Basiswand (271), die durch zwei gegenüberliegende Ränder (B1, B2) begrenzt ist, und
o zwei gegenüberliegende Seitenwände (272a, b), die die Basiswand (271) mit der Bodenwand (26) verbinden, wobei jede von einem entsprechenden Rand (B1, B2) der Basiswand (271) ausgeht und quer zu der Basiswand an sich ist,
- eine Maschine (30) zum Ausgeben des Getränks, wobei die Maschine (30) konfiguriert ist, um in die Kapsel (20) eine Prozessflüssigkeit zum Zubereiten des Getränks zu injizieren, wobei die Maschine (30) mit einer Extraktionseinheit (33) versehen ist, umfassend:
• einen Gehäusesitz (331) für die Kapsel (20), und
• ein Schneidelement (336),
**dadurch gekennzeichnet, dass** das Schneidelement (336) konfiguriert ist, um den Boden der Kapsel (10) an der Nut (27) zu durchstechen, um ein Durchgangsloch (F) zu definieren, das durch einen der Ränder (B1, B2) der Bodenwand (271) schneidet.

2. System nach Anspruch 1, wobei das Durchgangsloch (F) auch durch die Seitenwand (272a, 272b) schneidet, die von dem durch das Schneidelement (336) durchgeschnittenen Rand (B1, B2) ausgeht.

3. System (10) nach Anspruch 1, wobei jeder Rand (B1, B2) durch eine Ecke zwischen der Basiswand (271) und einer entsprechenden Seitenwand (272a, 272b) definiert ist.

4. System (10) nach Anspruch 1, wobei jeder Rand (B1, B2) durch eine Kehle zwischen der Basiswand (271) und einer entsprechenden Seitenwand (272a, 272b) definiert ist.

5. System (10) nach Anspruch 1, wobei das Schneidelement (336) mit einem Einführungsende versehen ist, das konfiguriert ist, um einen ersten Kontakt zwischen dem Schneidelement (336) und der Kapsel (10) zum Anfertigen des Durchgangslochs (F) zu definieren, und wobei der erste Kontakt zwischen dem Schneidelement (336) und der Kapsel (10) an einem der Ränder (B1, B2) der Basiswand (271) erfolgt.

6. System (10) nach Anspruch 1, wobei das Durchgangsloch (F) an einem der Ränder (B1, B2) zentriert ist.

7. System (10) nach dem vorherigen Anspruch, wobei mindestens eine der Seitenwände (272a, b) der Nut (27) mit der Basiswand (271) einen Winkel bildet, der größer ist als ein rechter Winkel.

8. System (10) nach einem der vorherigen Ansprüche, wobei die Nut (27) eine ringförmige Form aufweist.

9. System (10) nach einem der vorherigen Ansprüche, wobei das Schneidelement (336) und die Kapsel (20) entlang einer geradlinigen Bahn zwischen einer ausgerückten Position, in der sich das Schneidelement (336) außerhalb der Kapsel (20) befindet, und einer eingerückten Position, in der es zumindest teilweise in die Kapsel (20) eingeführt ist, gegenseitig beweglich sind.

10. System (10) nach einem der vorherigen Ansprüche, wobei das Schneidelement (336) einen Stachel oder eine Klinge oder eine Nadel umfasst.

## Revendications

1. Système (10) de production de boisson comprenant :
- une capsule (20) avec corps de récipient (21) définissant un compartiment de confinement adapté pour contenir une dose de substance alimentaire destinée à la production de la boisson, ledit corps de récipient (21) comprenant :
• une paroi latérale (23) délimitant une ouverture d'accès (24) au compartiment de confinement (22) de la substance alimentaire, et
• un fond, adapté pour fermer le corps de récipient (21 ) à l'une de ses extrémités opposée à l'ouverture d'accès (24), ledit fond comprenant une paroi de fond (26) et une rainure (27), ladite rainure (27) étant pourvue de :
∘ une paroi de base (271) délimitée par deux bords opposés (B1, B2), et
∘ deux parois latérales opposées (272a, b) reliant la paroi de base (271) à la paroi de fond (26), chacune partant d'un bord respectif (B1, B2) de la paroi de base (271) et étant transversale à la paroi de base elle-même,
- une machine (30) permettant de distribuer ladite boisson, la machine (30) étant configurée pour injecter dans la capsule (20) un liquide de traitement destiné à la production de la boisson, ladite machine (30) étant pourvue d'une unité d'extraction (33) comprenant :
• un boîtier (331) pour la capsule (20), et
• un élément de coupe (336), **caractérisé en ce que** l'élément de coupe (336) est configuré pour percer le fond de la capsule (10) au niveau de la rainure (27) de manière à définir un trou débouchant (F) traversant l'un des bords (B1, B2) de la paroi de base (271).

2. Système selon la revendication 1, dans lequel ledit trou débouchant (F) traverse également la paroi latérale (272a, 272b) provenant dudit bord (B1, B2) traversé par l'élément de coupe (336).

3. Système (10) selon la revendication 1, dans lequel chaque bord (B1, B2) est défini par un angle entre la paroi de base (271) et une paroi latérale respective (272a, 272b).

4. Système (10) selon la revendication 1, dans lequel chaque bord (B1, B2) est défini par un filet entre la paroi de base (271) et une paroi latérale respective (272a, 272b).

5. Système (10) selon la revendication 1, dans lequel l'élément de coupe (336) est pourvu d'une extrémité d'insertion configurée pour définir un premier contact entre l'élément de coupe (336) et la capsule (10) pour réaliser le trou débouchant (F), et dans lequel ledit premier contact entre l'élément de coupe (336) et la capsule (10) se produit sur l'un desdits bords (B1, B2) de la paroi de base (271).

6. Système (10) selon la revendication 1, dans lequel ledit trou débouchant (F) est centré sur l'un des bords (B1, B2).

7. Système (10) selon la revendication précédente, dans lequel au moins une des parois latérales (272a, b) de la rainure (27) définit avec la paroi de base (271) un angle supérieur à un angle droit.

8. Système (10) selon l'une quelconque des revendications précédentes, dans lequel la rainure (27) a une forme annulaire.

9. Système (10) selon l'une quelconque des revendications précédentes, dans lequel l'élément de coupe (336) et la capsule (20) se déplacent mutuellement le long d'une trajectoire rectiligne entre une position dégagée, dans laquelle l'élément de coupe (336) est à l'extérieur de la capsule (20), et une position engagée, dans laquelle il est au moins partiellement inséré à l'intérieur de la capsule (20).

10. Système (10) selon l'une quelconque des revendications précédentes, dans lequel l'élément de coupe (336) comprend une épine, une lame ou une aiguille.
